Europäisches Patentamt

(19) European Patent Office

Office européen des brevets

(11) EP 0 687 594 B1

(12) **FASCICULE DE BREVET EUROPEEN**

(45) Date de publication et mention
de la délivrance du brevet:
**16.09.1998 Bulletin 1998/38**

(51) Int. Cl.$^6$: **B60R 16/02**, B60Q 1/14,
G08B 17/10

(21) Numéro de dépôt: **95401399.1**

(22) Date de dépôt: **15.06.1995**

(54) **Procédé et dispositif de détection de brouillard ou de fumée dans un champ de l'environnement d'un véhicule automobile**

Verfahren und Vorrichtung zum Feststellen von Nebel oder Rauch im Bereich der Umgebung eines Kraftfahrzeugs

Method and apparatus for detecting fog or smoke in a field of the environment of a motor vehicle

(84) Etats contractants désignés:
**DE FR GB IT**

(30) Priorité: **16.06.1994 FR 9407371**

(43) Date de publication de la demande:
**20.12.1995 Bulletin 1995/51**

(73) Titulaire: **VALEO VISION**
**93000 Bobigny (FR)**

(72) Inventeurs:
• **Le Gallo, Yann**
  **F-94100 Saint-Maur (FR)**

• **Albou, Pierre**
  **F-75013 Paris (FR)**

(74) Mandataire:
**Martin, Jean-Jacques et al**
**Cabinet REGIMBEAU**
**26, Avenue Kléber**
**75116 Paris (FR)**

(56) Documents cités:
**EP-A- 0 351 003          EP-A- 0 529 346**
**GB-A- 2 209 900          US-A- 4 567 369**
**US-A- 4 614 968**

# Description

La présente invention est relative à un procédé et à un dispositif de détection de brouillard ou de fumée pour véhicule, notamment automobile.

L'invention concerne également un système de commande de projecteurs et/ou de feux antibrouillards comportant un tel dispositif.

L'utilisation des projecteurs et des feux antibrouillards n'est pas toujours réalisée à bon escient par les conducteurs de véhicules automobiles.

Or, ceci peut poser des problèmes de sécurité. Un véhicule dont les projecteurs et les feux antibrouillards sont allumés, alors qu'il n'y a pas de brouillard, peut en effet s'avérer dangereux pour les véhicules qui le précèdent ou le suivent.

Cette mauvaise utilisation est d'ailleurs sanctionnée dans certains pays.

Il a déjà été proposé dans EP-A-0 529 346 un dispositif permettant de détecter la présence de brouillard pour commander automatiquement l'allumage par exemple de feux antibrouillards, par l'analyse du contraste que présente une image relevée par des moyens optiques.

Toutefois, avec une telle analyse de contraste, il arrive que le dispositif détecte faussement la présence d'un brouillard, alors qu'il ne se trouve qu'en présence d'un obstacle de teinte uniforme tel qu'un mur.

Un but de l'invention est de pallier cet inconvénient.

Elle propose à cet effet un procédé de détection de la présence de brouillard ou de fumée dans un champ de l'environnement d'un véhicule automobile dans lequel :

- on relève au moins une image d'un champ de l'espace ;
- on analyse le contraste d'au moins une partie de cette image ;
- on émet, en fonction de cette analyse, un signal de détection de brouillard ou de fumée, caractérisé en ce qu'on détermine, pour la partie d'image analysée, une valeur caractéristique d'un nombre de pixels blancs et une valeur caractéristique d'un nombre de pixels noirs, en ce qu'on compare ces valeurs à des valeurs seuils et en ce que l'on considère, lorsque l'une de ces valeurs de nombres de pixels est supérieure à la valeur seuil qui lui correspond, qu'il y a absence de brouillard.

L'invention porte également sur un dispositif pour la détection de la présence de brouillard ou de fumée dans un champ de l'environnement d'un véhicule automobile, comportant :

- une caméra pour relever au moins une image d'un champ de l'espace,
- des moyens de traitement auxquels l'image relevée par la caméra est transmise, ces moyens de traitement analysant le contraste d'au moins une partie de cette image,
- des moyens d'émission, commandés par lesdits moyens de traitement, de façon à émettre un signal de détection de brouillard ou de fumée en fonction de l'analyse réalisée par lesdits moyens de traitement, un contraste important étant considéré par lesdits moyens de traitement comme caractéristique d'une absence de brouillard ou de fumée, les moyens de traitement comportant des moyens pour transformer l'image relevée par la caméra en une matrice de valeurs de niveaux de gris de pixels, caractérisé en ce que ces moyens de traitement comportent des moyens de calcul qui déterminent, à partir de la matrice de valeurs de niveaux de gris, un nombre de pixels noirs et un nombre de pixels blancs, les nombres de pixels noirs et blancs étant comparés à des valeurs seuils, les moyens de traitement ne commandant pas l'émission d'un signal de détection de brouillard ou de fumée par les moyens d'émission, lorsque l'un de ces nombres est supérieur à la valeur seuil qui lui correspond.

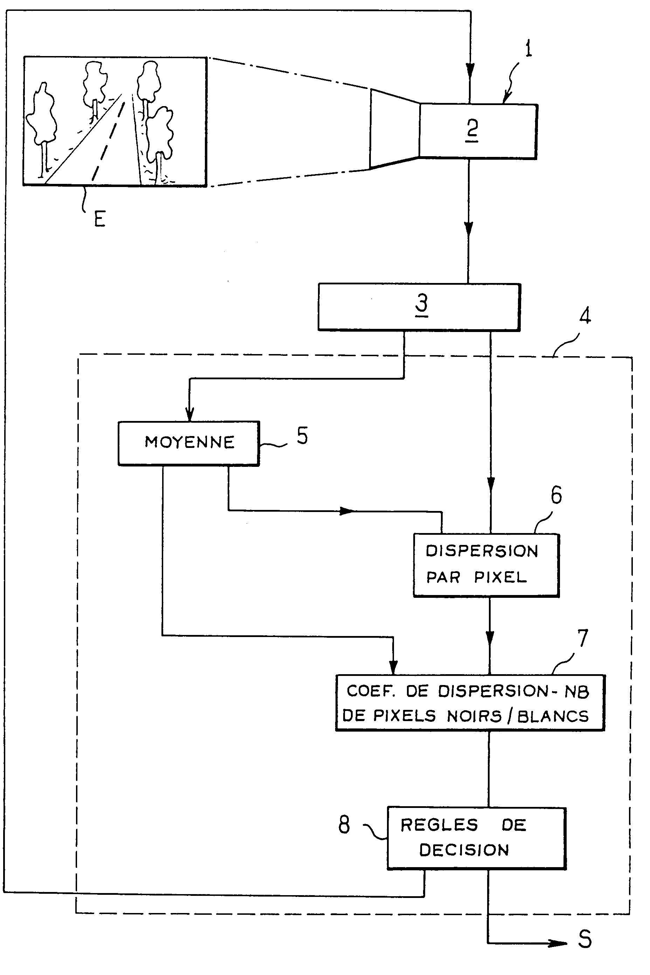

D'autres caractéristiques et avantages de l'invention ressortiront encore de la description qui suit. Cette description est purement illustrative et non limitative. Elle doit être lue en regard de la figure unique annexée qui est un schéma synoptique sur lequel sont représentées des différentes fonctions d'un dispositif conforme à l'invention.

Ce dispositif comporte plus particulièrement une caméra vidéo 1 qui est montée sur un véhicule et qui observe un champ E de l'espace. A titre d'exemple, la caméra 1 peut observer, ainsi qu'on l'a représenté, un champ E à l'avant du véhicule.

L'image de ce champ E relevée par la caméra 1 est transmise à une grille photosensible 2 de dimensions N x P. La caméra 1 est par exemple, à cet effet, une caméra du type à transfert de charge.

Cette grille photosensible 2 fournit en sortie une matrice numérique des niveaux de gris des pixels de l'image relevée. Cette matrice est stockée dans une mémoire tampon 3 de dimensions N x P, puis traitée par des moyens de calcul 4.

Dans une étape 5, ces moyens de calcul 4 réalisent une sommation sur l'ensemble des valeurs de niveaux de la matrice de gris et déterminent une valeur moyenne.

Dans une étape 6, les moyens de calcul 4 déterminent pour chacun des pixels une valeur de dispersion par soustraction de la valeur de niveau de gris du pixel à la valeur moyenne calculée dans l'étape 5.

Dans une étape 7, on déduit des valeurs de dispersion calculées pour chaque pixel dans l'étape 6, un coefficient de dispersion de la scène observée ; on calcule également, en utilisant les valeurs de dispersion de pixels fournies dans l'étape 6 et la valeur moyenne de niveau gris déterminée dans l'étape 5, un nombre de pixels considérés comme blancs et un nombre de pixels considérés comme noirs.

Le coefficient de dispersion et les nombres de pixels noirs ou blancs sont, dans une étape 8, comparés à des valeurs seuils. Dans cette étape, le dispositif met en oeuvre des règles de décision : en fonction de ces comparaisons, il envoie, vers des organes de puissance (non représentés) qui commandent les feux et les projecteurs du véhicule, un signal S qui commande l'allumage des feux et projecteurs antibrouillards.

En particulier :

- on interprète le fait que le coefficient de dispersion soit inférieur au seuil de dispersion comme caractéristique de la présence de brouillard ou de fumée ; le signal S en sortie du dispositif ne commande l'allumage des feux et projecteurs antibrouillards que si cette condition est respectée ;
- on interprète le fait que les nombres de pixels blancs ou de pixels noirs soient supérieurs aux seuils correspondant comme caractéristiques de l'observation par la caméra 1 d'un obstacle de teinte uniforme ; ceci permet d'éviter d'allumer les projecteurs et feux antibrouillards lorsque l'on se trouve devant un obstacle présentant peu de contraste, tel qu'un mur ou une route très dégagée.

Après la décision de l'étape 8, le traitement est repris avec une nouvelle image.

Bien entendu, le traitement qui vient d'être décrit peut être réalisé uniquement sur des portions d'image et non sur toute l'image ; il peut également être réalisé simultanément sur plusieurs images relevées.

La solution conforme à l'invention qui vient d'être décrite est une solution "logicielle", dont la mise en oeuvre nécessite un microprocesseur et une mémoire de taille suffisante, notamment pour la mémorisation de l'image.

D'autres solutions sont bien entendu possible. En particulier, en variante, le procédé conforme à l'invention peut être mis en oeuvre par des moyens purement éléctroniques.

Notamment, si la cadence d'acquisition des images est suffisamment rapide, il est possible d'utiliser pour calculer le coefficient de contraste de l'image n la moyenne des niveaux de gris des pixels de l'image n-1, les changements entre ces deux images successives restant très faibles. La moyenne étant connue avant l'arrivée du premier pixel, les écarts peuvent être calculés au fur et à mesure de l'extraction des pixels du capteur (les capteurs CCD sont lus en série). Le coefficient de contraste étant en général de la forme

$$\sigma = f_1(\Sigma_n f_2(g_n - \langle g_n \rangle))$$

où $g_n$ est le niveau de gris du $n^{\text{ème}}$ pixel, $\langle g_n \rangle$ la moyenne des niveaux de gris et $f_1$ et $f_2$ deux fonctions de de l'ensemble des nombres réels dans lui-même, il est possible de calculer ce coefficient de manière cumulative ainsi d'ailleurs que les nombres de pixels noirs et de pixels blancs. La mémorisation de m'image devient alors inutile (il suffit de savoir faire les calculs assez rapidement).

Si les fonctions restent simples, il est facile de réaliser le traitement en logique câblée (éventuellement sur un circuit intégré spécifique de faible coût).

## Revendications

1. Procédé de détection de la présence de brouillard ou de fumée dans un champ de l'environnement d'un véhicule automobile dans lequel :

   - on relève au moins une image (E) d'un champ de l'espace ;
   - on analyse le contraste d'au moins une partie de cette image (E);
   - on émet, en fonction de cette analyse (E), un signal de détection (S) de brouillard ou de fumée,
     caractérisé en ce qu'on détermine (7), pour la partie d'image analysée, une valeur caractéristique d'un nombre de pixels blancs et une valeur caractéristique d'un nombre de pixels noirs, en ce qu'on compare (8) ces valeurs à des valeurs seuils et en ce que l'on considère, lorsque l'une de ces valeurs de nombres de pixels est supérieure à la valeur seuil qui lui correspond, qu'il y a absence de brouillard.

2. Procédé selon la revendication 1, caractérisé en ce que l'analyse de contraste comprend la détermination (6, 7) d'une valeur caractéristique dudit contraste et la comparaison (8) de cette valeur à une valeur seuil et en ce que l'on considère qu'il y a absence de brouillard ou de fumée lorsque la valeur caractéristique du contraste est supérieure à cette valeur seuil.

3. Procédé selon la revendication 2, caractérisé en ce que, pour déterminer la valeur caractéristique du contraste ($\sigma$), on détermine une moyenne (5; $\langle g_n \rangle$) de valeurs caractéristiques des niveaux de gris des pixels de la partie d'image analysée, on soustrait (6) cette valeur moyenne (5; $\langle g_n \rangle$) aux valeurs ($g_n$) de niveaux de gris des pixels et on somme (7) les résidus ainsi obtenus.

4. Dispositif pour la détection de la présence de brouillard ou de fumée dans un champ de l'environnement d'un véhicule automobile, comportant :

   - une caméra (1) pour relever au moins une image d'un champ de l'espace (E),
   - des moyens de traitement (2, 3, 4) auxquels l'image (E) relevée par la caméra (1) est transmise, ces moyens de traitement (2, 3, 4) analysant le contraste d'au moins une partie de cette image (E),

- des moyens d'émission (4), commandés par lesdits moyens de traitement (2, 3, 4), de façon à émettre un signal de détection (S) de brouillard ou de fumée en fonction de l'analyse réalisée par lesdits moyens de traitement (2, 3, 4), un contraste important étant considéré par lesdits moyens de traitement comme caractéristique d'une absence de brouillard ou de fumée,

les moyens de traitement comportant des moyens (2) pour transformer l'image (E) relevée par la caméra en une matrice de valeurs de niveaux de gris de pixels,

caractérisé en ce que ces moyens de traitement comportent des moyens de calcul (4) qui déterminent (7), à partir de la matrice de valeurs de niveaux de gris, un nombre de pixels noirs et un nombre de pixels blancs, les nombres de pixels noirs et blancs étant comparés à des valeurs seuils, les moyens de traitement (2, 3, 4) ne commandant pas l'émission d'un signal de détection (S) de brouillard ou de fumée par les moyens d'émission, lorsque l'un de ces nombres est supérieur à la valeur seuil qui lui correspond.

5. Dispositif selon la revendication 4, caractérisé en ce que les moyens de calcul (4) déterminent la dispersion (6, 7) des valeurs ($g_n$) de niveaux de gris des pixels de la matrice d'une moyenne (5; $\langle g_n \rangle$) des valeurs ($g_n$) de niveaux de gris des pixels de la matrice et comparent (8) cette dispersion à un seuil prédéterminé, les moyens de traitement (2, 3, 4) ne commandant l'émission d'un signal de détection (S) par les moyens d'émission que lorsque la dispersion (6, 7) est supérieure audit seuil.

6. Système de commande d'au moins un projecteur et/ou d'un feu antibrouillards de véhicule, notamment automobile, caractérisé en ce qu'il comporte un dispositif selon la revendication 4, dont les moyens de traitement (2, 3, 4) sont reliés aux organes de puissance dudit feu et/ou projecteur, le signal de détection (S) émis par les moyens d'émission commandant l'allumage dudit feu et/ou projecteur.

**Claims**

1. Method for detecting the presence of fog or smoke in a field of the environment of a motor vehicle in which:

- at least one image (E) of a field of the space is recorded;

- the contrast of at least part of this image (E) is analysed;

- according to this analysis (E), a detection signal (S) for fog or smoke is emitted, characterised in that, for the image part analysed, a value characteristic of a number of white pixels and a value characteristic of a number of black pixels are determined (7), in that these values are compared (8) with threshold values and in that, when one of these pixel number values is greater than the threshold value which corresponds thereto, it is considered that there is no fog.

2. Method according to Claim 1, characterised in that the contrast analysis comprises the determination (6, 7) of a value characteristic of the said contrast and the comparison (8) of this value with a threshold value and in that it is considered that there is no fog or smoke when the value characteristic of the contrast is greater than this threshold value.

3. Method according to Claim 2, characterised in that, in order to determine the value characteristic of the contrast ($\sigma$), a mean (5; $\langle g_n \rangle$) of values characteristic of the grey levels of the pixels of the image part analysed is determined, this mean value (5; $\langle g_n \rangle$) is subtracted from the grey-level values ($g_n$) of the pixels and the residues thus obtained are summed (7).

4. Device for detecting the presence of fog or smoke in a field of the environment of a motor vehicle, having:

- a camera (1) for recording at least one image of a field of the space (E),

- processing means (2, 3, 4) to which the image (E) recorded by the camera (1) is transmitted, these processing means (2, 3, 4) analysing the contrast of at least part of this image (E),

- emission means (4), controlled by the said processing means (2, 3, 4), so as to emit a detection signal (S) for fog or smoke in accordance with the analysis carried out by the said processing means (2, 3, 4), a high contrast being considered by the said processing means to be characteristic of an absence of fog or smoke,

the processing means including means (2) for converting the image (E) recorded by the camera into a matrix of pixel grey-level values, characterised in that these processing means include calculation means (4) which determine (7), from the matrix of grey-level values, a number of black pixels and a number of white pixels, the numbers of black and white pixels being compared with threshold values, the processing means (2, 3, 4) not requiring the emission of a fog or smoke detection signal (S) by the emission means when one of these numbers is greater than the threshold value which corresponds thereto.

5. Device according to Claim 4, characterised in that the calculation means (4) determine the scatter (6, 7) of the pixel grey-level values $(g_n)$ of the matrix of a mean $(5; \langle g_n \rangle)$ of the values $(g_n)$ of pixel grey levels of the matrix and compare (8) this scatter with a predetermined threshold, the processing means (2, 3, 4) requiring the emission of a detection signal (S) by the emission means only when the scatter (6, 7) is greater than the said threshold.

6. System of controlling at least one vehicle headlight and/or fog-light, notably for a motor vehicle, characterised in that it includes a device according to Claim 4, the processing means (2, 3, 4) of which are connected to the power means of the said light and/or headlight, the detection signal (S) emitted by the emission means controlling the illumination of the said light and/or headlight.

**Patentansprüche**

1. Verfahren zum Feststellen des Vorhandenseins von Nebel oder Rauch im Bereich der Umgebung eines Kraftfahrzeugs, bei dem:

   - mindestens ein Bild (E) eines Raumbereichs aufgenommen wird,
   - der Kontrast mindestens eines Teils dieses Bilds (E) analysiert wird,
   - in Abhängigkeit von dieser Analyse (E) ein Signal (S) zur Feststellung von Nebel oder Rauch gesendet wird,
     **dadurch gekennzeichnet**, daß für den analysierten Bildteil ein Kennwert einer Zahl von weißen Pixeln und ein Kennwert einer Zahl von schwarzen Pixeln bestimmt wird, daß diese Werte mit Schwellenwerten verglichen werden (8) und daß, wenn einer dieser Werte von Pixelzahlen größer als der ihm entsprechende Schwellenwert ist, davon ausgegangen wird, daß kein Nebel vorhanden ist.

2. Verfahren nach Anspruch 1 , **dadurch gekennzeichnet,** daß die Kontrastanalyse die Bestimmung (6, 7) eines Kennwerts des besagten Kontrasts und den Vergleich (8) dieses Werts mit einem Schwellenwert umfaßt und daß davon ausgegangen wird, daß kein Nebel oder Rauch vorhanden ist, wenn der Kennwert des Kontrasts größer als dieser Schwellenwert ist.

3. Verfahren nach Anspruch 2 , **dadurch gekennzeichnet,** daß zur Bestimmung des Kennwerts des Kontrasts $(\sigma)$ ein Mittelwert $(5; \langle g_n \rangle)$ von Kennwerten der Graustufen der Pixel des analysierten Bildteils bestimmt, dieser Mittelwert $(5; \langle g_n \rangle)$ von den Werten $(g_n)$ der Graustufen der Pixel subtrahiert und die so erhaltenen Restwerte addiert werden (7).

4. Vorrichtung zum Feststellen des Vorhandenseins von Nebel oder Rauch im Bereich der Umgebung eines Kraftfahrzeugs, umfassend:

   - eine Kamera (1), um mindestens ein Bild eines Raumbereichs (E) aufzunehmen,
   - Verarbeitungsmittel (2, 3, 4), an die das durch die Kamera (1) aufgenommene Bild (E) übertragen wird, wobei diese Verarbeitungsmittel (2, 3, 4) den Kontrast mindestens eines Teils dieses Bilds (E) analysieren,
   - Sendemittel (4), die durch die besagten Verarbeitungsmittel (2, 3, 4) so gesteuert werden, daß sie ein Signal (S) zur Feststellung von Nebel oder Rauch in Abhängigkeit von der durch die besagten Verarbeitungsmittel (2, 3, 4) durchgeführten Analyse senden, wobei ein erheblicher Kontrast durch die besagten Verarbeitungsmittel als Kennzeichen für das Nichtvorhandensein von Nebel oder Rauch angesehen wird,
     wobei die Verarbeitungsmittel Mittel (2) umfassen, um das durch die Kamera aufgenommene Bild (E) in eine Matrix von Pixelgraustufenwerten umzuwandeln,
     **dadurch gekennzeichnet**, daß diese Verarbeitungsmittel Rechenmittel (4) umfassen, die ausgehend von der Matrix von Graustufenwerten eine Zahl von schwarzen Pixeln und eine Zahl von weißen Pixeln bestimmen, wobei die Zahlen der schwarzen und weißen Pixel mit Schellenwerten verglichen werden, wobei die Verarbeitungsmittel (2, 3, 4) das Senden eines Signals (S) zur Feststellung von Nebel und Rauch durch die Sendemittel nicht steuern, wenn eine dieser Zahlen größer als der ihr entsprechende Schwellenwert ist.

5. Vorrichtung nach Anspruch 4 , **dadurch gekennzeichnet,** daß die Rechenmittel (4) die Streuung (6, 7) der Graustufenwerte $(g_n)$ der Pixel der Matrix eines Mittelwerts $(5; \langle g_n \rangle)$ der Graustufenwerte $(g_n)$ der Pixel der Matrix bestimmen und diese Streuung mit einem vorbestimmten Schwellenwert vergleichen (8), wobei die Verarbeitungsmittel (2, 3, 4) das Senden eines Feststellungssignals (S) durch die Sendemittel nur dann steuern, wenn die Streuung (6, 7) größer als der besagte Schwellenwert ist.

6. System zur Steuerung mindestens eines Nebelscheinwerfers und/oder einer Nebelleuchte eines Fahrzeugs, insbesondere eines Kraftfahrzeugs, **dadurch gekennzeichnet**, daß es eine Vorrichtung nach Anspruch 4 umfaßt, deren Verarbeitungsmittel (2, 3, 4) mit den Leistungsorganen der besagten Leuchte und/oder des besagten Scheinwerfers verbunden sind, wobei das durch die Sendemittel gesendete Feststellungssignal (S) die Einschaltung der besagten Leuchte und/oder des besagten Scheinwerfers betätigt.